(19) Europäisches Patentamt
European Patent Office
Office européen des brevets

(11) **EP 2 342 040 B1**

(12) **EUROPEAN PATENT SPECIFICATION**

(45) Date of publication and mention of the grant of the patent:
**20.05.2015 Bulletin 2015/21**

(21) Application number: **08876253.9**

(22) Date of filing: **03.11.2008**

(51) Int Cl.:
*B23K 20/12* *(2006.01)*    *B23K 31/12* *(2006.01)*

(86) International application number:
**PCT/PT2008/000045**

(87) International publication number:
**WO 2010/050834 (06.05.2010 Gazette 2010/18)**

(54) **SYSTEM AND PROCESS FOR AUTOMATIC DETERMINATION OF WELDING PARAMETERS FOR AUTOMATED FRICTION STIR WELDING**

SYSTEM UND VERFAHREN ZUR AUTOMATISCHEN BESTIMMUNG VON SCHWEISSPARAMETERN FÜR AUTOMATISIERTES REIBRÜHRSCHWEISSEN

SYSTÈME ET PROCÉDÉ DE DÉTERMINATION AUTOMATIQUE DES PARAMÈTRES DE SOUDAGE AUTOMATIQUE PAR FRICTION MALAXAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**13.07.2011 Bulletin 2011/28**

(73) Proprietor: **Instituto De Soldadura E Qualidade 2740-120 Porto Salvo (PT)**

(72) Inventor: **LOURO, Rui Alexandre Narciso Miguens P-2745-234 Queluz (PT)**

(74) Representative: **Alves Moreira, Pedro Raul César Ferreira Lda. Rua do Patrocinio, 94 P-1399-019 Lisboa (PT)**

(56) References cited:
WO-A-97/48518        WO-A-2006/029104
DD-A5- 281 767       FR-A- 2 881 067
GB-A- 2 266 953      JP-A- 2005 186 083
US-A- 4 067 490      US-A- 5 833 127

## Description

### Field of the invention

The most relevant technical field for the present invention is the field of solid state welding, more specifically the Friction Stir Welding (FSW) process. The invention pertains to a system and process capable of automatically determine welding parameters which allow the FSW operation to be carried out in an automated manner, requiring minimal or no user inputs. To accomplish this objective the system possesses means for automatically detecting at least part of the welding conditions: the welding thickness and the base material being joined. The joint type, which is supplied by the user, completes the welding conditions. The system further possesses means for, based on the information of the welding conditions, determining suitable welding parameters which allow the FSW operation, or any variant thereof, to be carried out using those welding parameters.

### Background of the invention

The friction stir welding (FSW) process is a relatively new welding process that is fully described in the following sources: EP 0615480, EP 0752926 and US 20030205565. The process consists in inserting a rotating tool (4), with a specific geometry, in a welding joint (3), which is the surface between both components (1, 2) being joined, and advancing it along said joint line. The rotation of the tool causes the material around it to move, through a process similar to hot extrusion, thus eliminating the joint line and joining both components (1,2) in the locations processed by said tool. Document FR 2 881 067 discloses a friction stir welding method wherein the welding parameters are chosen on the basis of an analytical model.

The FSW welding process is able to produce welds with a high quality level. The quality of a weld can be largely viewed as a comparison of how the properties of the material affected by the welding process relate to the properties of the base material. The quality of a weld can be measured by a series of destructive and non-destructive tests. These tests, which are specified in several standards, such as ISO and EN standards, include: visual inspections, penetrating dyes, X-Ray or ultrasonic examination, bending tests, tensile tests, macrographic examinations, etc.

Due to the nature of the FSW process, and its variants, this technology is especially suited for welding lightweight alloys, which are notoriously difficult to weld through common fusion based welding processes such as Gas Metal Arc Welding or Gas Tungsten Arc Welding. The FSW process is also able to weld materials that cannot be joined through conventional welding processes, and also to weld a wide range of dissimilar materials, such as welding steel to aluminum.

The welding tool comprises two different geometric features: a pin (5) and a shoulder (6). The pin is the bottommost element of the tool and has a substantially cylindrical shape. It is often fitted with a thread thus improving the base material flow and, as a consequence, the welding quality. The pin is fully inserted into the welding joint and it is the element responsible for the base material movement that ultimately joins the components, thus performing the welding operation.

The shoulder also possesses a cylindrical shape, however its diameter is greater than that of the pin. This element is attached to the pin and is the upmost element of the welding tool. Only the bottommost surface of the shoulder comes in contact with the base material. The main purpose of the shoulder is to restrain the movement of the extruded base material to the confines of the initial base material volume, thus avoiding any loss of material through the surface of the base material. Any such loss would most likely lead to a weld of unacceptable quality. The shoulder is also partly responsible for the base material heating, through the friction obtained by pressing the rotating shoulder against the stationary base material. This heat flow increases the base material temperature thus facilitating the flow of the extruded material around the pin. Usually the surface of the shoulder is concave, although several geometries are known to have been successfully used.

Some more recent tools use two shoulders, one pressed against the top of the joint and the other one pressed against the bottom, or root, of the joint. Usually the diameter of the first shoulder is equal to that of the second shoulder. These tools are known as bobbin tools.

As with any welding process, the FSW process and its variants have a series of welding parameters that have to be selected in order for the process to be carried out. These parameters are: the welding speed (V), the rotating speed of the tool (W), the tilt angle of the tool ($\alpha$) and the vertical force (F). The geometry of the tool is also a relevant process parameter. The most important parameters for describing the geometry of the tool are the maximum pin diameter ($\varphi p$) and the shoulder diameter ($\varphi e$).

In the case of the variant of the FSW process known as friction stir spot welding (FSSW) the welding parameter known as welding speed (V) does not exist, being replaced by the welding time (tw).

The vertical force (F) is not always used as a welding parameter. In such cases the vertical position of the tool is kept constant thus eliminating the need for this welding parameter. This method usually leads to the welding results not being reproducible because of the minor changes in the base material thickness, and is seldomly used in industrial equipments. In the event that this welding method is used then the welding parameter set is reduced to the welding speed (V) or the welding time (tw), the rotating speed of the tool (W), the tilt angle of the tool ($\alpha$), the pin diameter ($\varphi$p) and the shoulder diameter ($\varphi$e).

The choice of suitable welding parameters is crucial for successfully applying the FSW process or its variants. Even small variations in some parameters may have a strong influence in the quality of the welds. However, due to the relatively high number of parameters and the complexity of the process, obtaining suitable sets of welding parameters is still a difficult task, which prevents the wider use of this technology.

The usual method for obtaining welding parameters sets that can provide an acceptable welding quality for the specified welding conditions is to conduct a large series of experimental welds, using trial and error methods, aimed at optimizing the welding parameters. This is a rather complex process that can be even more complex in the case of dissimilar welds.

The experimental process requires experienced personnel and a substantial amount of time to be completed. This is due to the fact that the quality assessment of the experimental welds is quite cumbersome, requiring a significant amount of destructive and non-destructive tests, such as tensile tests, bend tests, X-rays, penetrating dyes, etc. The costs of this experimental procedure can be quite significant due to the requirements of expert personnel, the amount of base material needed, the occupation of expensive FSW equipment, the quality assessment tests of the experimental welds, etc. Furthermore the need for this experimental procedure also increases the time-to-market of any product manufactured using the FSW process. These costs are such that they prevent the use of this technology by most companies, especially small and medium sized companies.

Patent application WO 2006/077356 A1 attempts to address this problem by suggesting a parameter optimization method where the effects of the chosen welding parameters are computed through the use of an analytic model during the course of an experimental welding operation. This method enables the quality assessment of the weld to be done automatically without resorting to the use of costly and time consuming quality assessment tests, such as X-rays, tensile tests, etc. The complexity of conducting the experimental optimization procedure is thus greatly reduced. However, the use of this method does not prevent the need for experimental tests. Furthermore it does not foresee the use of an automated method for assessing the base material, which means that the welding parameter for sets that are analyzed by this method need to be given by experts. Therefore the use of this method does not eliminate the need for process experts and a significant number of experimental tests, each time the welding conditions are altered.

Patent application US 20080083817 proposes a method for controlling a FSW machine which, among other features, possesses a master set of parameters that, under certain circumstances, are used to control de machine. These sets of parameters are intended to aid in the operation of the components of FSW machine, such as the electric engines responsible for some of the movement of the machine, and not to provide suitable sets of welding parameters based on the welding conditions. The selection of welding parameters is outside the scope of application US 20080083817. Furthermore the invention disclosed in that application does not possess means for ascertaining the base material.

The present invention solves all of the aforementioned drawbacks by presenting a full automated system and process allowing an automatic determination of welding parameters for any pair of components to be welded by a FSW process and its variants, greatly improving its efficiency and reducing the operation costs.

## Summary of the invention

The present invention relates to a system for automatic determination of welding parameters for automated friction stir welding are variants thereof, characterized in that comprises a welding conditions assessing device and a welding parameters determining device in data communication with each other, wherein said welding conditions assessing device comprises

- joint thickness measuring means,

- base material properties determining means, comprising
  a chemical composition determining device,
  a hardness test device for assessing the metallurgical state of said base material,

- at least one data processing means for receiving a manual data entering of the joint type and weld path and for processing the latter data and the information from said joint thickness measuring means and said base material properties determining means in order to obtain the mechanical properties of said base material to be welded and send the information to said welding parameters determining device

and wherein said welding parameters determining device comprises electronic means to compute and output suitable welding parameters for welding said base material.

In an embodiment, the system for automatic determination of welding parameters is characterized in that said welding parameters being selected from the group comprising welding speed, tool rotating speed, vertical force, tool tilt angle, maximum pin diameter, shoulder diameter and the like.

In a further embodiment, the system for automatic determination of welding parameters is characterized in that said chemical composition determining device comprises a grinder device for grinding a very small area of said component surface before chemical composition determining tests being carry out,

In a preferred embodiment the system of the invention is characterized in that

- the joint thickness measuring means of said welding conditions assessing device being at least one ultrasonic position sensor,

- the chemical composition determining device of said welding condition assessing device comprises at least one Nd-Yag laser (12), at least one spectrometer and several electronic and optical devices and comprises at least one rotating grinder (10),

- the hardness test device of said welding conditions assessing device comprises at least one ultrasonic position sensor (16) and at least one indenter (15) with a spherical tip,

- the data processing means of both said welding conditions assessing device and said welding parameters determining device comprise at least one personal computer, at least one keyboard, at least one monitor and other common peripherals.

The present invention also relates to a process for automatic determination of welding parameters for automated friction stir welding are variants thereof, characterized in that comprises the steps of

a) measuring the thickness of the welding joint,

b) determining the chemical composition of the base material,

c) determining the metallurgical state of base material,

d) manual entering of data relative to joint type and weld path,

e) processing information from preceding steps so as to obtain welding conditions data,

f) automatically determining the welding parameters, based on said welding conditions data, by running at least one optimization algorithm and at least one process model.

In an embodiment the process is characterized in that said welding parameters being selected from the group comprising welding speed, tool rotating speed, vertical force, tool tilt angle, maximum pin diameter, shoulder diameter and the like.

In a further embodiment the process of the invention is characterized in that said step of processing information to obtain welding conditions data comprises obtaining the mechanical properties of said base material from a database.

In another embodiment the process of the invention is characterized in that said chemical composition of said base material being determined by the laser induced breakdown spectroscopy method or any variant thereof.

In still another embodiment the process of the invention is characterized in that said chemical composition of said base material being determined by X-Ray fluorescence spectroscopy, or any variant thereof.

In a further embodiment the process of the invention is characterized in that said chemical composition of said base material being determined by measuring the electrical resistivity and the magnetic permeability of the base material.

In a yet further embodiment the process of the invention is characterized in that said metallurgical state of said base material being determined by a hardness test.

In a further embodiment the process of the invention is characterized in that said step of automatically determining the welding parameters comprises at least a first optimization algorithm, at least a second optimization algorithm and at least a process model, wherein the first optimization algorithm selects randomly a value for the welding speed (V) and passes this value, together with said welding conditions, to a second optimization algorithm, wherein said second optimization algorithm computes the welding parameters that can enable the selected welding speed value (V) to be used and following presents the latter welding parameters and said welding conditions to a model of the welding process, wherein said process model is able to assess the weld quality that these parameters would generate and, in turn, passes this information again to said second optimization algorithm, wherein said second optimization algorithm will change the values of the welding parameters and repeat this operation until an acceptable weld quality has been reached or a given number of iterations have been used, and, finally, presents the results to the said first optimization algorithm, wherein said first optimization algorithm, based on the latter results regarding the weld quality, selects a new welding speed value and sends it, again, together with the welding conditions, to said second optimization algorithm, providing an iterative run until the maximum welding speed that provide an acceptable welding quality is reached.

In another embodiment the process of the invention is characterized in that said process model of said step of automatically determining the welding parameters being selected from the group comprising analytic model, "black-box" model, "grey-box" model or combinations thereof.

In still another embodiment the process of the invention is characterized in that said process model is a "black-box" model comprising a multilayer perceptron neural network with one hidden layer comprising eight processing units.

In a further embodiment the process of the invention is characterized in that said process model operates with the method of forward finite difference.

The use of system according to the present invention is intended for connection with a welding machine to provide an automated welding apparatus.

The use of system of the present invention is intended for a friction stir welding process and variants thereof.

The use of process according to the invention is intended for welding apparatus.

The use of process according to the invention is intended for joining dissimilar materials.

Following there is provided the detailed description of the invention with reference to preferred embodiments (by way of example only) and to accompanying drawings.

Brief description of drawings

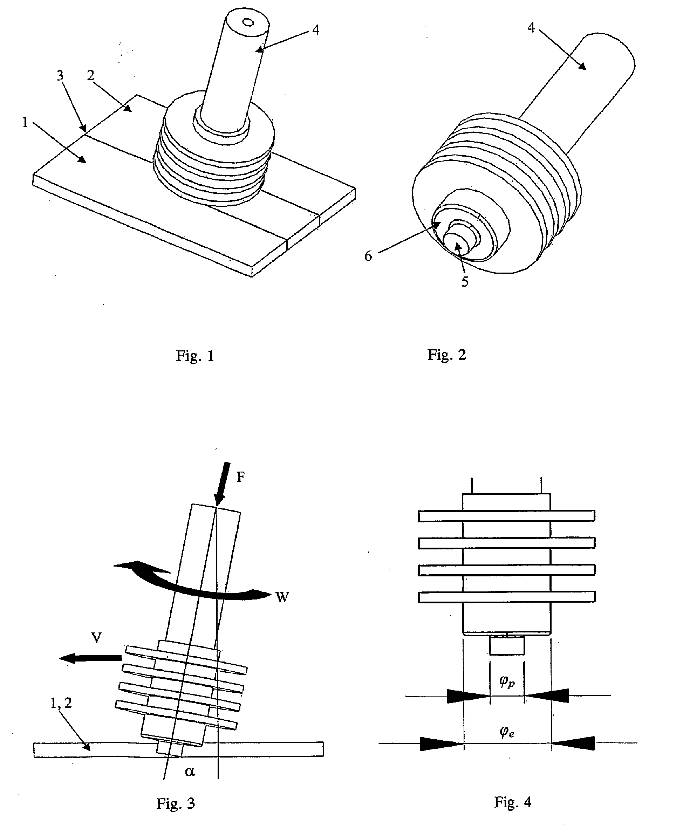

Figure 1 is a perspective view of a FSW process being performed.

Figure 2 is a perspective view of a FSW tool.

Figure 3 is a detailed view of a FSW process where the main welding parameters are shown.

Figure 4 is a detailed view of the main geometric features of a welding tool.

Figure 5 is a schematic view of an ultrasonic sensor emitting a sound wave.

Figure 6 is a schematic view of the operation of an ultrasonic sensor receiving a reflected sound wave.

Figure 7 is a perspective view of an eccentric grinding operation intended to remove the superficial oxides and impurities of the base material.

Figure 8 is a schematic view of an operation of the laser induced breakdown spectroscopy devices.

Figure 9 is a schematic view of an operation of a device intended for conducting hardness tests.

Figure 10 is a schematic view of a multilayer perceptron neural network.

Figure 11 is a schematic view of a FSW process model of the invention.

Figure 12 is a flow chart of the welding conditions data determination according to the process of the present invention.

Figure 13 is a flow chart of the welding parameters determination according to the process of the present invention.

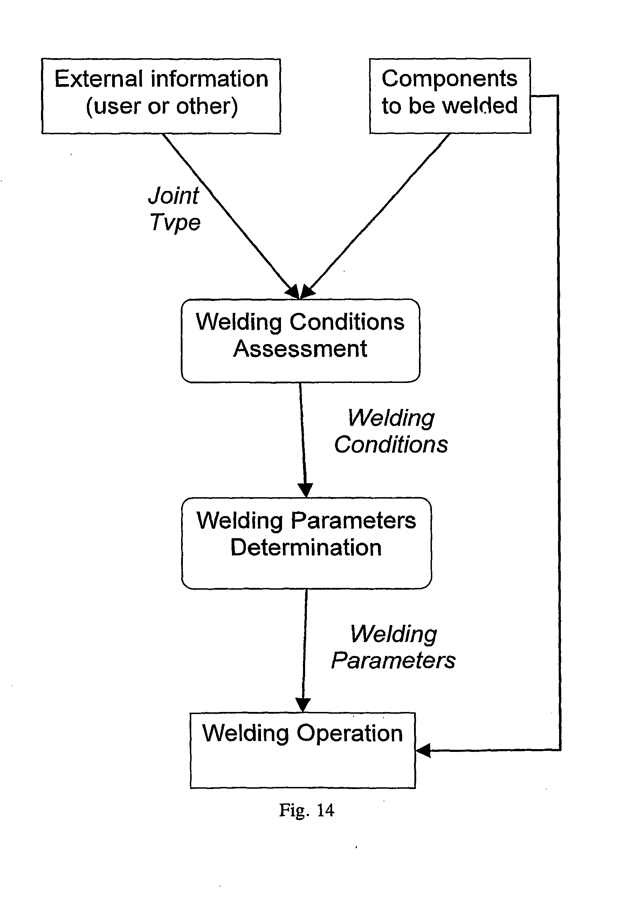

Figure 14 is a flow chart of the system according to the invention for automatic determination of parameters for automated friction stir welding.

**Detailed description of the invention**

The present invention relates to a system and process capable of automatically determine welding parameters which allow conducting the FSW operation or its variants in a fully automated manner. This invention will enable the use of this technology by people without expertise in this area.

More specifically it pertains to a system and process capable of automatically determining the majority of the welding conditions: base material and welding thickness. The joint type, a part of the welding conditions, needs to be selected by the user due to the fact that the choice between different joint types depends on the purpose of the welded components. The information pertaining to the welding conditions is then used to determine suitable welding parameters, which allow carrying out the welding operation without usual time losses in optimizing said parameters for the material to be welded, therefore, increasing efficiency and reducing costs. The intervention of the user of the system is reduced to supplying the components (1, 2) to be welded and selecting the joint type.

This system can perform the FSW process or any variants thereof, the FSW process and any set of variants thereof or any set of variants of the FSW process.

The operation of the system is initiated when a component (1) to be welded is supplied. The process of obtaining the welding conditions is then initiated. One of these welding conditions is the thickness of the component, which has to be measured. This can be achieved by the use of a range of displacement sensors, such as ultrasound sensors (7), laser sensors, etc.

A superficial layer of said component is removed by mechanical, or other, means. The purpose of this operation is to remove superficial impurities and oxides that may adversely affect the operations intended to assess the chemical composition of the base material. This operation can be carried out by a variety of processes, such as grinding (10), polishing, etc.

This removal operation implies that at a given point the thickness of the component is reduced, which may raise questions pertaining to the resistance of the component. Due to the fact that the loss in thickness is quite small, only sufficient for removing superficial oxides and impurities, and that any welding operation entails a loss of mechanical resistance in the joint which is rarely smaller than 10%, obviously the loss in mechanical resistance due to this removal operation will not endanger the design of the component.

After the removal operation is completed the chemical composition of the base material is determined. This information has to be obtained by non-destructive or quasi non-destructive methods in a short time span. These objectives can be achieved by using, among other methods: X-Ray fluorescence, laser induced breakdown spectroscopy, also referred as LIBS, and the detection of the electrical resistivity and magnetic permeability of the material.

The X-Ray fluorescence method consists in exciting the chemical components of the base material by bombarding them with high energy X-Ray or Gamma radiation. Once properly excited the base material will emit a characteristic "secondary" radiation. The wavelengths of this "secondary" radiation depend of the chemical components that are present in the base material. Therefore it is possible, by analyzing the amplitude of each wavelength of this "secondary" radiation, to determine the chemical elements that comprise the base material and their relative quantities. The calculations needed for attaining this purpose are conducted electronically through the use of a processor, e. g., personal computer (PC). Once the chemical composition has been obtained the base material can be easily identified.

The laser induced breakdown spectroscopy requires the use of a low power laser (12) which is focused in a very small area of the base material. When this laser is discharged a very small volume of the base material, the focus area and a depth of a few nanometers, is ablated, which instantaneously generates a plasma gas (14) at very high temperatures, in the range of 10000 K to 20000 K. Under these conditions the ablated material is dissociated into excited ionic and atomic species. During the generation of the plasma it expands at supersonic speeds and then cools down. At this point the characteristic emission lines of the elements comprising the base material can be observed. The radiation emitted at this point is captured by an optic element (13), which relays it to a spectrometer that can generate the emission spectrum of the elements present in the base material and their relative quantities. This information, which is processed through the use of a PC, can be used to determine the chemical composition of the base material.

Another method by which the base material can be determined is by detecting the electric and magnetic properties of the base material. A suitable apparatus for this purpose is known from WO 2007027117, although some changes would be required in order for it to be applied to the present case. By matching the values for the electric resistivity and the magnetic permeability obtained through this method against a database of known values it is possible to identify the base material.

The previously mentioned methods provide sufficient information for determining the base material composition, which is sufficient for obtaining suitable welding parameters. However, the FSW process is a solid state welding process. Therefore the metallurgical state of the base material, resulting from the mechanical and heat treatments to which it has been subjected to, has a significant influence in the FSW process.

The metallurgical state of the base material is relevant for establishing the mechanical properties of the base material. These properties have a substantial influence in the base material flow around the pin, which can ultimately be related to the weld quality. Usually, it is possible to obtain a better set of welding parameters by including information pertaining to the metallurgical state of the base material in the calculations intended to obtain them.

The metallurgical state of the base material is not easy to assess in a simple manner. The methods previously detailed for assessing the chemical composition of the base material are not able to determine the metallurgical state of the base material. One partial exception is the method based in the assessment of the electric resistivity and magnetic permeability, however while some heat treatments can lead to changes in the electric resistivity of the material the mechanical treatments have no influence in this property. Therefore this method is not suited for assessing the metallurgical state.

The most straightforward method by which to obtain this information is by conducting a hardness test. This test is a quasi non destructive test in the sense that it does imply altering the shape of the component; however these changes are minimal being comprised of a number of small indentations in the surface of said component. The presence of these indentations does not imply any significant changes to the component that may impair its intended use.

A hardness test basically consists of forcing an element (15), with a known shape, into the base material at a constant force (HF). This element (15) is dubbed indenter and may be made from hardened metal or diamond. The area that is affected by the indenter can be used to obtain the hardness value of the base material. The smaller the indented area the greater the hardness measurement.

Combining the information pertaining to the chemical composition with that pertaining to the metallurgical state will enable the full characterization of the base material. This characterization can also be used to obtain the mechanical properties of the base material, through the use of a list or database of materials. Due to the nature of the FSW process, the properties of the base material that are more suited for its characterization are mechanical properties such as the yield stress and the ultimate tensile stress. These properties can only be assessed through the use of destructive tests, whose use would not comply with the objectives of the invention. Therefore these properties are obtained from a list or database that relates the chemical composition of the base material and its metallurgical state with the known mechanical properties of commercial base materials.

The full characterization of the base material provides the most suited information for obtaining suitable sets of welding parameters.

The procedure that has so far been described has lead to the characterization of the base material of one of the components to be welded. At this point the second component (2) to be welded will be provided to the system, which will then repeat the process of base material characterization for this component. Since the FSW process is particularly suited for conducting welds with dissimilar materials this course of action is required in order to account for that possibility.

The welding joint to be used in a FSW process, as far as the selection of welding parameters is concerned, can be reduced to two cases: butt joint and lap joint. This information depends on the design and the purpose of the welded components and therefore must be provided by the user of the system. It may also be required to provide the weld path, or joint line.

The components that are going to undergo the welding operation are placed in the joint configuration that the user has selected. Said components are then clamped in such a way that they will remain motionless during the welding operation.

The known variants of the FSW process, with the exception of friction stir stitch welding can only be applied to a specific joint. For instance, friction stir spot welding can only be applied to overlapping joints. In these cases, there is no need for the user to supply information pertaining to the joint type.

Once this operation has been completed, the system requires the welding parameters for carrying out the FSW process or variants thereof.

The most suited welding parameters may be obtained by using, among others, two methods. The first method consists of comparing the information pertaining to the current welding conditions with a list comprising a large range of welding conditions and the corresponding most suited welding parameters. This list is compiled by performing the previously mentioned experimental tests. As a result, this approach is quite costly. This approach has the additional disadvantage of being limited to a specific, although extensive, set of welding conditions. This means that the most suited welding parameters for any given welding conditions that are not present in said list couldn't be obtained. However providing the system with such a parameter listing could be of use to most users, provided that the listing would contain the most common welding cases.

A more suitable manner to obtain the welding parameters consists of using a model-based approach. In this approach a model of the FSW process is used to simulate the effect of a given set of welding parameters and conditions on the quality of the weld, thus determining if they are suitable. The sets of parameters are obtained through the use of optimization algorithms which attempt to provide the optimal parameters to any given set of objectives.

The FSW process model is a key aspect of the present invention. It is developed so as to receive the welding conditions and parameters and return the quality of the weld. It would be more useful to obtain a model that would provide the intended welding quality and conditions it would directly return the parameters, however such type of models are often impossible to obtain in the case of dynamical processes because any attempt to do so often ends in obtaining a non-causal model which is impossible to use.

The use of this approach requires a model of the FSW process. This model may be, among others: an analytic model, a "black-box" model or a "grey-box" model.

The analytic model is based on the physical laws governing the FSW process and therefore will lead to the best results. However, the analytic modeling of the FSW process is a highly cumbersome subject that has so far yielded extremely complex models that require the use of finite element techniques. The high level of complexity of the models and the use of the finite element technique entails a substantial amount of time for running a simulation. In order for the system to be effective, the welding parameters must become available in a relatively short time after the welding conditions are known. Therefore, this type of model may not be the best solution for use in the present invention. However it is expected that an increase in the knowledge of the inner workings of the FSW process will lead to the development of a suitable model.

The "black-box" model is a type of model that can be constructed using sets of experimental data. The first step is to select a mathematical structure for the model, which has the ability to mimic the response of the process. One usual structure for this purpose is the neural network and its many variants. This type of structure comprises the combination of chosen sets of non-linear equations whose inputs and outputs are multiplied by weights, which are constant numbers, and summed together with a constant number named threshold. By changing these weights and thresholds, it is possible to mimic any input/output set. The task of adjusting these weights and thresholds for the specific case of the FSW process, one requires a training set comprising of a number of inputs, welding conditions and parameters, and outputs, welding quality. An optimization algorithm is then used adjust the weights and thresholds of the neural network so that the response of the neural network to an input of the training set is equal to the corresponding output in the experimental set. This operation is, in most cases, known as the training operation. If the both the mathematical structure and the training set are properly selected the model will provide an accurate model of the FSW process. This type of model requires significantly less experimental data than the approaches based on parameter listings and provides a response in the event that the welding conditions and parameters being considered were not part of the training set. Furthermore the amount of time needed to conduct a simulation, once the model is completed, is often negligible.

The "grey-box" model is a combination of the analytic and "black-box" models, where the mathematical structure is custom to each case and is defined by the analytic modeling, or parts thereof. The parameters of the model are obtained by using methods similar to that of the "black-box" models. A training set of experimental data is selected and used, via optimization algorithms, to adjust the model parameters so that it mimics the behavior of the FSW process. This method may require a substantially smaller training set, however it may also be difficult to achieve. The time requirement for conducting a simulation depends on the complexity of the chosen mathematical structure. This approach has the added benefit of enabling the use of empiric knowledge of the process in the modeling operation.

The process model is often developed so as to provide an output that is inversely proportional to the quality level of the welds, meaning that a small output of the model would correspond to a good welding quality. This is usually done to facilitate the use of optimization algorithms in conjunction with the process model.

Once the process model has been obtained, either by the previously described methods or any other, a mean of assessing the quality of a weld for a given set of parameters and welding conditions, without conducting a weld, is available. This model is then combined with optimization algorithms that receive the welding conditions, obtained as previously described and select the welding parameters by running a number of simulations. The objective of this optimization procedure maybe one of several: maximize productivity, maximize welding quality, etc.

In some safety critical components, such as the ones intended for the nuclear industry, the quality of the welds must be as high as possible. Therefore, the objective of the optimization algorithm is to select the set of welding parameters that maximize the welding quality.

In the majority of cases, the objective of the optimization algorithm will be to achieve welding parameters that can provide maximal productivity. This objective is attained by welding parameters that can ensure that the welding costs are minimized while ensuring that the welding quality is maintained within acceptable limits. Due to the nature of the FSW process it entails a very limited amount of variable costs (electric power costs, welding tools, etc) that are negligible when compared with the fixed costs (amortization of the FSW equipment, manpower, etc). Under this scenario the only way to reduce costs is to increase the amount of components processed per amount of time, which is equivalent to increasing the welding speed (V), one of the welding parameters. In the case of friction stir spot welding (FSSW), a variant of the FSW process, being used the welding time ($t_w$) should be minimized.

The optimization of the welding quality is conducted through the use of optimization algorithms that can be gradient based, evolutionary or others. Depending on the model of the FSW process it may be necessary to use iterative algorithms. The choice of the optimization algorithm depends of the most suitable process model and of the objective of the optimization.

Gradient based algorithms make use of the information pertaining to the gradient of the process model at a given initial set of welding parameters, which can be selected at random or by any other method. This information is used to determine another set of welding parameters which, for the given welding conditions, can lead to a better welding quality. These algorithms can make use of the information pertaining to the first order gradient, Jacobian Matrix, or to both to first order gradient and the second order gradient, Hessian Matrix. This information provides a good estimate for the position of the stationary points, which in this case are minimum points, closest to the selected initial points. As previously mentioned the output of the FSW process model is inversely proportional to the welding quality. Therefore the objective of the optimization is to provide a parameter set that minimizes the model output. There are a number of known optimization algorithms based on these concepts. Their main limitation is the fact that, due to their nature, the algorithm will provide the minimum closest to the initial point selected randomly, or by any other means. This property makes these types of algorithms unsuited for dealing with functions with a significant number of minima.

Evolutionary optimization algorithms behave significantly better when applied to a function, or model, with significant numbers of local minima. Unlike their gradient based counterparts their basic operating principle does not imply any assumption on the topography of the function. Their operation is based on evolutionary principles observed in nature, more specifically in biologic and metallurgic systems among others. A number of candidate solutions are selected, randomly or by any other methods, and their adequacy for providing an optimal solution is accessed by using the function, or process model. Based on this information a new set of candidate solutions is selected. The method for carrying out this selection depends on the specific algorithm that is chosen, e.g. genetic algorithms, and is often done by combinations of the previous candidate solutions. These steps are repeated until a given stoppage criterion is attained, e.g. a maximum number of iterations, a value for the process model output and others.

In the case where optimal productivity, or maximum welding speed (V), is required the optimization algorithms cannot be directly applied because welding speed (V) is one of the inputs of the process model and these algorithms are suitable only for carrying out the optimization of the process model outputs. The optimization procedure for selecting the welding parameters is initiated by selecting a value for V. This selection can be done randomly or by any other means. The value of the welding speed remains fixed while the remaining welding parameters are optimized through the use of an optimization algorithm and the process model, in a similar manner to the one described previously for optimizing the welding quality. The objective of this optimization operation is to obtain the FSW parameters that combined with the previously selected welding speed provide an acceptable level of weld quality. If this speed can lead to an acceptable welding quality then a higher welding speed value is selected and the process previously described is repeated. This procedure will be carried out until an acceptable welding quality is not reached. If, on the other hand, the initial welding speed value does not lead to an acceptable weld quality a smaller welding speed value is selected and the previous process is repeated. The maximum welding speed that can be attained while ensuring an acceptable welding quality as well as the FSW parameters that enable the use of this speed are then used for conducting the welding operation.

Once the welding parameters have been selected the components are clamped in the welding position. Ideally the equipment used for conducting the welding operation possesses means for automatically selecting a welding tool from a storage location. The tool is selected based on the welding parameters that include dimensions of the tool geometry, and the welding conditions, which include the joint thickness, which is essential for determining the pin length. Afterwards the FSW operation, or any variant thereof, is conducted leading to the joining of the components (1, 2). The clamping of the components (1, 2) is then removed and they can be extracted.

**Preferred embodiment**

The operation of the system of the preferred embodiment is initiated when the component (1) to be welded is supplied. The system possesses means for positioning the component so as to enable the welding conditions to be assessed. The first welding condition to be assessed is the joint thickness, which is measured by an ultrasonic position sensor.

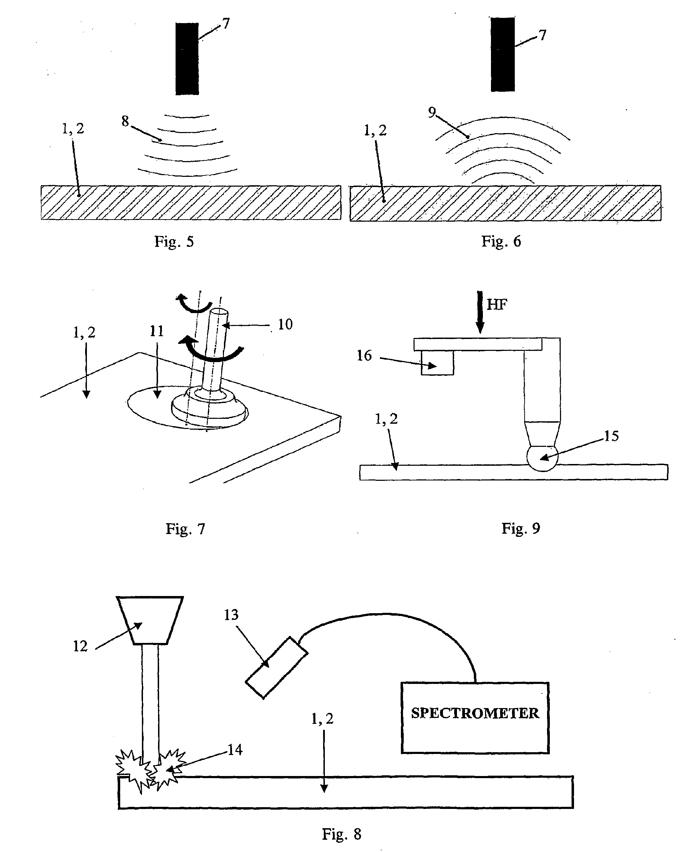

The ultrasonic position sensor emits a high frequency sound wave (8) during a short period of time, as described in Figure 5. These waves are reflected (9) back to the ultrasonic sensor by any obstacle in their path, as shown in Figure 6. The sensor possesses the capability of measuring the elapsed time between the sound wave being emitted and its reflection being detected. Assuming that the speed of sound is constant, which is a generally acceptable assumption for the ambient temperature range of the vast majority of industrial facilities, it is possible through simple calculations to obtain the distance between the sensor and the object in its measuring path. By knowing the distance of the position sensor to the component support structure and measuring the distance to the closest object to the sensor, which will be the component (1) to be welded, it is possible via a simple calculation to obtain the thickness of the component being welded, also known as the joint thickness.

In order to complete the assessment of the welding conditions, the base material must be determined. This is accomplished by determining the chemical composition of the base material and its metallurgical state. First of all it is necessary to remove the superficial layer of oxides and impurities in a given area of the surface of component (1), so as to avoid an incorrect assessment of the chemical composition. The system possesses a device, shown in Figure 7, which is basically a rotating grinder (10), whose base is made of an abrasive material. The grinding operation affects only a very small area of the component, sufficient only for the LIBS test and the hardness tests that will be described further ahead. The grinding device has the capability of simultaneously rotating the grinder (10) on its own axis and on a different axis which is parallel to the previous one but non-coinciding, thus creating an eccentric motion. This eccentric motion is intended to ensure a reasonably flat surface where hardness tests can be carried out.

At this point it is possible to assess the chemical composition of the base material. The LIBS method is used for this purpose. This method requires a certain amount of equipments to operate properly: an Nd-Yag laser (12), a spectrometer and several electronic and optical devices. The equipment layout can be seen in Figure 8. The method uses a laser discharge (14) that ablates a small volume of the base material (in the order of 1000 $\mu m^3$) generating a plasma at high temperature, in the range of 10000 K to 20000 K. These conditions lead to the ablated material being dissociated into excited ionic and atomic species. When the plasma is being generated it expands to supersonic speeds and then cools down. During this stage the characteristic emissions of the chemical components of the base material can be measured. The radiation emitted under these conditions is captured by an optical element and carried through a fiber optical cable to a spectrometer. Since the time span in which this radiation is emitted is very short the spectrometer is connected to ND-Yag laser via an electronic connection that causes the spectrometer to begin reading a few milliseconds after the laser burst. The spectrometer is able to measure the radiation intensity in a significant range of wavelengths thus providing the spectrum of the emitted radiation. The spectrum information is relayed to a PC that, by performing calculations and database comparisons, is able to obtain the chemical elements present in the base material and their relative quantities, thus enabling the chemical composition of the base material to be obtained.

The assessment of the metallurgical state of the base material, is done through a hardness test, as shown in Figure 9. The system possesses a special device for this purpose. This device comprises an ultrasonic position sensor (16) and an indenter with a spherical tip (15), which is made of cemented steel. The device is pressed against the component (1) to be welded at a constant force (HF). The measurement of the hardness value is related to the area of the component that is imprinted by the indenter. Since the geometry of the spherical tip is known it is possible to relate the area affected by the indenter with the depth at which the indenter penetrates the component. The position sensor (16), which operates in the manner previously described, is used to determine this depth. The hardness results obtained through this method usually have a smaller precision than if the measurement had been obtained by a direct measurement of the area imprinted by the indenter. However the precision level is sufficient for the intended purpose. In order to obtain a suitable hardness value three hardness tests are conducted in the flattened area (11). The average of the results of these three tests is used as the hardness value for the base material.

The information pertaining to the chemical composition and metallurgical state of the base material is then used to obtain the mechanical properties of the base material. The base material properties that have the most importance for the FSW process are the ones pertaining to its behaviour under plastic deformation, which is the most relevant mechanism in the FSW process. Three properties are especially relevant: the yield stress ($\sigma c$), the ultimate tensile stress ($\sigma r$) and the elongation at fracture ($\varepsilon$). These properties provide insight into the stress and strain conditions at which the plastic deformation of the base material occurs. The process model, which will be described further ahead, requires the values for these properties to be quantified for the ambient temperature and the process temperature. The FSW process occurs at relatively high temperatures, most of which are known from published experimental research. In the case of most Aluminum alloys the process temperature is around 400 °C. The values for these properties at the mentioned temperatures are known from a variety of sources. In the preferred embodiment of the invention these data have been compiled into a database where the chemical composition and metallurgical state of a given base material can be easily corresponded with its mechanical properties. Therefore, once the chemical composition and metallurgical state of the base material have been determined in the manner previously described, the information is relayed to a personal computer PC which conducts a search in the aforementioned database and provides the numeric values for the mechanical properties.

At this point the second component (2) to be welded is supplied to the system and the base material of this component is assessed through the same process that have been previously described for the first component (1) to be welded. This procedure is necessary in order to account for the case where the FSW is used to carry out welds in dissimilar materials.

Once this information is available the welding conditions are almost fully defined. The only information missing at this point is the joint type. This information is requested from the user of the system which supplies it during the time it takes the system to assess the base material. Depending on the capabilities of the machine used for conducting the welding operation it may also be necessary to provide the desired weld path.

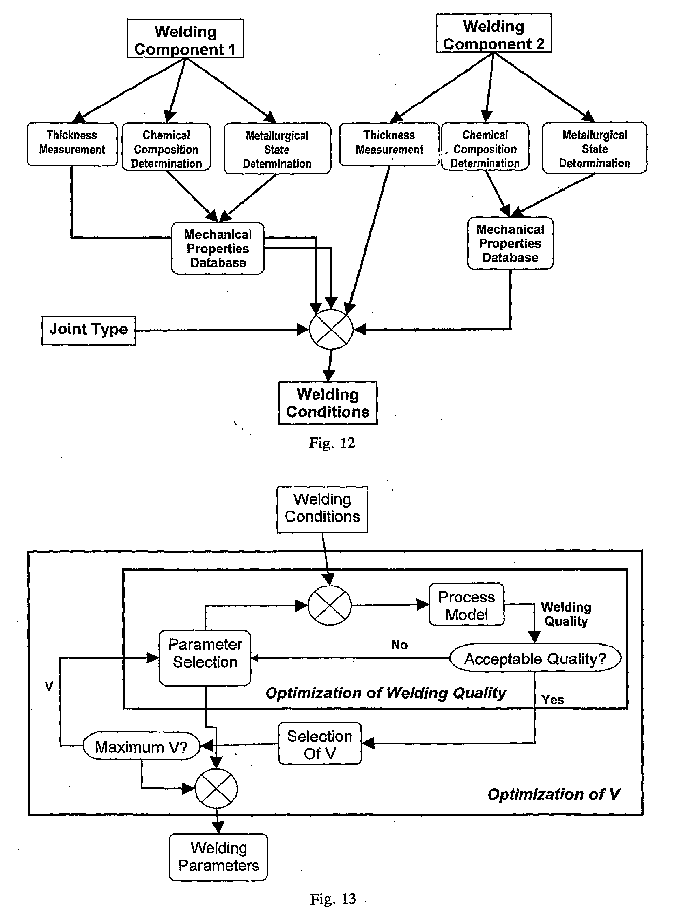

The information that has been gathered along the different steps of this process is then used to obtain the welding parameters. The information flow leading to the welding conditions being obtained is depicted in Figure 12.

The welding parameters, preferably the V, W, F, $\alpha$, $\varphi p$ and $\varphi e$ parameters, are obtained in the manner henceforth described. The welding conditions are supplied to a first optimization algorithm, whose purpose is to maximize the process productivity (since FSW process has nearly no variable costs, the only way to reduce welding costs is to increase the rate at which the material is processed, which can only be achieved by increasing the welding speed), and then this first optimization algorithm starts by randomly selecting a value for the welding speed (V) and passes this value, together with the welding conditions, to a second optimization algorithm. The purpose of the second optimization algorithm is to provide said welding parameters that, combined with the selected welding speed value (V), guarantee an acceptable welding quality. In order to achieve this purpose the welding parameters and the welding conditions are given to a model of the process that, based on this information, is able to provide the weld quality that these parameters would generate. A diagram of this combination of optimization algorithms can be viewed in Figure 12.

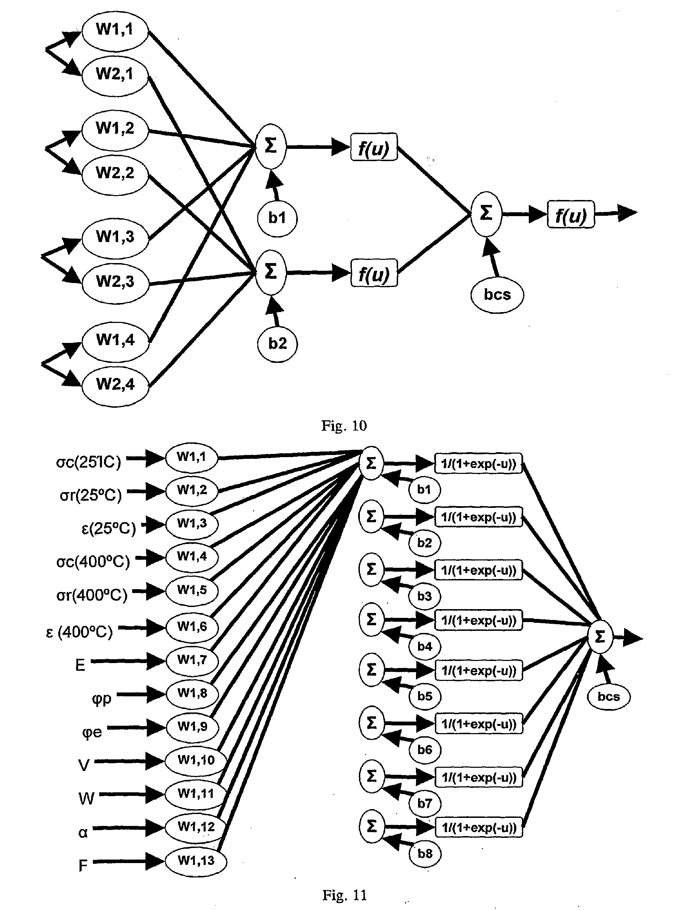

The process model consists of a multilayer perceptron neural network with one hidden layer, a well known type of "black-box" model. This type of neural network is made up of several processing units named neurons. In a neuron the inputs are multiplied by weights and the result summed with thresholds, both the weights and thresholds are constant values. The value of this sum is the transformed by a function, which is often non-linear. The neurons are grouped in layers, where the outputs of one layer of neurons are the inputs to the following layer. A description of a neural network can be found in Figure 10. The last layer of neurons is called the output layer, all other layers are called hidden layers. In the specific case of the FSW process a neural network with one hidden layer and 8 neurons in the hidden layer is used. The activation function for the hidden layer is a logarithmic sigmoidal function (f(u)=1/(1 +exp(-u))) whilst the activation function for the output layer is linear (f(u)=u). This neural network receives the information pertaining to the welding conditions and process parameters. The welding conditions are characterized by the value of the joint thickness (E) and of the mechanical properties of the base material as previously described ($\sigma c$ (25 °C), or (25 °C), $\epsilon$ (25 °C), $\sigma c$ (400 °C), or (400 °C), $\epsilon$ (400 °C)). The values for the process parameters, preferably V, W, F, $\alpha$, $\varphi p$ and $\varphi e$ parameters, are also inputs to the process model. The output of the neural network (Q) is a number that provides an indication as to the quality of the weld. A schematic view of the process model can be found in Figure 11. Note that, for the sake of simplicity, only the connections of the inputs to the first neuron are represented. The connections of the inputs to the remaining neurons are in all similar to the represented connections. The main difference is the fact that the values of the multiplying weights and summing thresholds are different in each case. The values of the neural network output (Q) are inversely proportional to the quality of the weld, more specifically: the smaller the value of Q the better the quality of the weld. The network was trained using methods known from literature and experimental data pertaining to a significant amount of welds. The quality of these experimental welds was assessed through the standardized tests. The results of these tests were combined in a single numerical value that was then used, as values of Q, to conduct the training of the neural network. The value of Q is obtained by using the following formula:

Q= 1 if the visual inspection test is not successful.
Q= 0,8 if the penetrating dye test is not successful.
Q= 0,6 if the X-ray or ultrasonic test is not successful.
Q= 0,4 if the tensile test is not successful.
Q= 0,3 if the bending test is not successful.
Q= 0,2 if the macrographic analysis is not successful.

According to the methodology used, a value of Q smaller than 0,2 indicates a weld with an acceptable level of quality.

Based on the value of Q obtained for the selected welding parameters, preferably (V, W, F, $\alpha$, $\varphi p$ and $\varphi e$), the second optimization algorithm changes the values of said welding parameters (W, F, $\alpha$, $\varphi p$ and $\varphi e$) by using the steepest gradient optimization algorithm. This iterative algorithm, which is known from literature, requires the use of information pertaining to the first order gradient of the process model at the selected point. The new point is obtained through the following formula:

$$[W(k+1),\ F(k+1),\ \alpha(k+1),\ \varphi p(k+1),\ \varphi e(k+1)] = [W(k), F(k), \alpha(k), \varphi p(k),$$
$$\varphi e(k)] - \gamma[dQ/dW,\ dQ/dF,\ dQ/d\alpha,\ dQ/d\varphi p,\ dQ/d\varphi e],$$

where $\gamma$ is the step size and dQ/dx is the derivative of the process model in regards to variable x.

The process model is described by a highly complex function, which makes the task of obtaining the analytic derivative of the model rather cumbersome. Therefore the use of numeric derivatives is recommended. In the case of the preferred embodiment the forward finite difference was used, in this method the derivative is calculated through the use following formula:

$$dQ(W,F,\alpha,\varphi p,\varphi e)/dW = (Q(W+\eta,F,\alpha,\varphi p,\varphi e) - Q(W,F,\alpha,\varphi p,\varphi e))/\eta$$

where η is a sufficiently small value, usually 1% of W.

The step size γ is an important parameter of the steepest descent method but its value needs to be determined at each iteration of the algorithm. This is due to the fact that the topology of the process model is not known. The step size γ is optimized using a very simple trial and error algorithm that consists in selecting an initial value, usually 1, and then assessing the welding quality (Q) at the point provided by the steepest descent formula. If the value of Q at iteration k+1 is smaller than the value of Q for iteration k then the value of γ is increased and this sequence is repeated until the smallest Q is obtained. In the case where for the initial γ the value of Q, at iteration k+1, is bigger than the value for Q at iteration k, the value of γ is decreased and this sequence is repeated until the smallest value of Q is obtained. The value of γ that provided the smallest Q in any event is the one used to compute [W(k+1),F(k+1),α(k+1),φp(k+1),φe(k+1)].

This operation is repeated until an acceptable weld quality (Q) has been reached or a given number of iterations (e. g. , 50) have been used, meaning that there is no parameter set that can enable the welding speed (V) to provide an acceptable welding quality. The results of the second optimization algorithm are given to the first optimization algorithm that, based on these results, selects a new welding speed value and sends it, together with the welding conditions, to the second optimization algorithm. The first optimization algorithm is iteratively run until the maximum welding speed that can provide an acceptable welding quality is reached. At this point the welding parameters (V, W, F, α, φp and φe) are fully defined. The method of obtaining the welding parameters is depicted in Figure 13.

Once the welding parameters have been selected components 1 and 2 are clamped in the welding position in such a way so as to ensure that they remain motionless during the welding operation.

A welding tool is then selected from a tool storage area, which contains a number of different tools. The selection of which tool to use is made through the welding parameters that pertain to the tool geometry φp and φe) and the joint thickness, which is used to determine the pin length.

At this point tool is rotated at a constant rotating speed (W) and inserted into the welding joint, either making a hole in the joint or being inserted in a previously made hole with the diameter of the pin (φp). The tool is then advanced through the welding joint, along the welding path, at a constant speed (V), vertical force (F) and tilt angle (α). When the tool reaches the end of the weld path the tool is removed from the welding joint and the clamping device releases the components that are now welded. The system is then ready for conducting another weld.

Note that the previously description of the preferred embodiment of the invention is not intended to limit the scope of the invention in any way. Furthermore, even though the preferred embodiment is applied to the FSW process it should not be perceived as excluding the application of the invention to the variants of this process.

## Examples

Example 1 - The system of the present invention was applied to the welding of AA5083-H111 aluminum alloy plates, in a butt joint configuration, with a thickness of 6 mm. The system provided the following parameters:

V = 275 mm/min
W = 500 RPM
F = 20 kN
α = 2°
φp = 7 mm
φe = 21 mm.

These parameters provided a weld with acceptable quality.

Example 2 - The system of the present invention was further applied to the welding of AA6082-T651 aluminum alloy plates, in a butt joint configuration, with a thickness of 3 mm. The system provided the following parameters:

V = 1100 mm/min
W = 1150 RPM
F = 7kN
α = 3°
φp = 5 mm
φe = 13 mm.

These parameters provided a weld with acceptable quality.

It is to be understood that the present invention is not limited in its application to the details of the construction and the arrangement of the components set for in the description or in the drawings. The invention is capable of other embodiments or of being implemented or carried out in various ways. Also, it is to be understood that the phraseology and terminology employed herein is for the purpose of description and should not be regarded as limiting. It should be appreciated that the one skilled in the art, taking into account the teachings of the present invention, will be able to make numerous variations, changes and equivalents without departing from the scope of the present invention as defined in the appended claims.

**Claims**

1. System for automatic determination of welding parameters for automated friction stir welding are variants thereof, comprising a welding conditions assessing device and a welding parameters determining device in data communication with each other,
   **characterized in that** said welding conditions assessing device comprises

   - joint thickness measuring means,
   - base material properties determining means, comprising
   a chemical composition determining device,
   a hardness test device for assessing the metallurgical state of said base material,
   - at least one data processing means for receiving a manual data entering of the joint type and weld path and for processing the latter data and the information from said joint thickness measuring means and said base material properties determining means in order to obtain the mechanical properties of said base material to be welded and send the information to said welding parameters determining device

   and wherein said welding parameters determining device comprises electronic means to compute and output suitable welding parameters for welding said base material.

2. System for automatic determination of welding parameters according to claim 1, **characterized in that** said welding parameters being selected from the group comprising welding speed (V), tool rotating speed (W), vertical force (F), tool tilt angle ($\alpha$), maximum pin diameter ($\varphi p$), shoulder diameter ($\varphi e$) and the like.

3. System for automatic determination of welding parameters according to claim 1 and 2, **characterized in that** said chemical composition determining device comprises a grinder device for grinding a very small area of said component surface before chemical composition determining tests being carry out.

4. System according to claims 1 to 3, **characterized in that**

   - the joint thickness measuring means of said welding conditions assessing device being at least one ultrasonic position sensor,
   - the chemical composition determining device of said welding condition assessing device comprises at least one Nd-Yag laser (12), at least one spectrometer and several electronic and optical devices and comprises at least one rotating grinder (10),
   - the hardness test device of said welding conditions assessing device comprises at least one ultrasonic position sensor (16) and at least one indenter (15) with a spherical tip,
   - the data processing means of both said welding conditions assessing device and said welding parameters determining device comprise at least one personal computer, at least one keyboard, at least one monitor and other common peripherals.

5. Process for automatic determination of welding parameters for automated friction stir welding are variants thereof, **characterized in that** comprises the steps of

   a) measuring the thickness of the welding joint,
   b) determining the chemical composition of the base material,
   c) determining the metallurgical state of base material,
   d) manual entering of data relative to joint type and weld path,
   e) processing information from preceding steps so as to obtain welding conditions data,
   f) automatically determining the welding parameters, based on said welding conditions data, by running at least one optimization algorithm and at least one process model.

6. Process according to claim 5, **characterized in that** said welding parameters being selected from the group comprising welding speed (V), tool rotating speed (W), vertical force (F), tool tilt angle ($\alpha$), maximum pin diameter ($\varphi p$),

shoulder diameter ($\varphi$e) and the like.

7. Process according to claim 5 and 6, **characterized in that** said step of processing information to obtain welding conditions data comprises obtaining the mechanical properties of said base material from a database.

8. Process according to claim 5, **characterized in that** said chemical composition of said base material being determined by the laser induced breakdown spectroscopy method or any variant thereof.

9. Process according to claim 5, **characterized in that** said chemical composition of said base material being determined by X-Ray fluorescence spectroscopy, or any variant thereof.

10. Process according to claim 5, **characterized in that** said chemical composition of said base material being determined by measuring the electrical resistivity and the magnetic permeability of the base material.

11. Process according to claim 5, **characterized in that** said metallurgical state of said base material being determined by a hardness test.

12. Process according to claim 5, **characterized in that** said step of automatically determining the welding parameters comprises at least a first optimization algorithm, at least a second optimization algorithm and at least a process model, wherein
the first optimization algorithm selects randomly a value for the welding speed (V) and passes this value, together with said welding conditions, to a second optimization algorithm, wherein
said second optimization algorithm computes the welding parameters that can enable the selected welding speed value (V) to be used and following presents the latter welding parameters and said welding conditions to a model of the welding process, wherein
said process model is able to assess the weld quality that these parameters would generate and, in turn, passes this information again to said second optimization algorithm, wherein
said second optimization algorithm will change the values of the welding parameters and repeat this operation until an acceptable weld quality has been reached or a given number of iterations have been used, and, finally, presents the results to the said first optimization algorithm, wherein
said first optimization algorithm, based on the latter results regarding the weld quality, selects a new welding speed value and sends it, again, together with the welding conditions, to said second optimization algorithm, providing an iterative run until the maximum welding speed that provide an acceptable welding quality is reached.

13. Process according to claims 5 and 12, **characterized in that** said process model of said step of automatically determining the welding parameters being selected from the group comprising analytic model, "black-box" model, "grey-box" model or combinations thereof.

14. Process according to claim 13, **characterized in that** said process model is a "black-box" model comprising a multilayer perceptron neural network with one hidden layer comprising eight processing units.

15. Process according to preceding claim, **characterized in that** said process model operates with the method of forward finite difference.

16. Use of system according to claims 1 to 4 in connection with a welding machine to provide an automated welding apparatus.

17. Use of system according to claims 1 to 4 in a friction stir welding process and variants thereof.

18. Use of process according to claims 5 to 15 in welding apparatus.

19. Use of process according to preceding claim for joining dissimilar materials.

**Patentansprüche**

1. System für automatische Bestimmung von Schweißparametern, für automatisiertes Rührreibschweißen oder Varianten davon, umfassend eine Schweißbedingungen-Auswertungsvorrichtung und eine Schweißparameter-Bestimmungsvorrichtung in Datenübertragung miteinander,
**dadurch gekennzeichnet, dass**
die gennannte Schweißbedingungen-Auswertungsvorrichtung

- Messmittel für die Schweißnahtdicke
- Bestimmungsmittel für Grundstoffseigenschaften, umfassend eine Bestimmungsvorrichtung für chemische Zusammensetzung, eine Härteprüfvorrichtung zur Auswertung vom metallurgischen Zustand des gennannten Grundstoffs,
- wenigstens ein Datenverarbeitungsmittel zum Empfang einer manueller Dateneingabe der Art von Schweißnaht und des Schweißdurchgangs und zur Verarbeitung der letzten Daten und die Information aus den gennannten Messmitteln für die Schweißnahtdicke und den gennannten Bestimmungsmitteln für Grundstoffseigenschaften, um die mechanischen Eigenschaften des gennannten zu schweißenden Grundstoffs zu erhalten und um die Information an die gennannte Schweißparameter-Bestimmungsvorrichtung zu senden, umfasst,

und wobei die gennannte Parameter-Bestimmungsvorrichtung elektronische Mittel zur Berechnung und Ausgabe von geeigneten Schweißparametern, um den gennannten Grundstoff zu schweißen, umfasst.

2. System für automatische Bestimmung von Schweißparametern nach Anspruch 1, **dadurch gekennzeichnet, dass** gennannte Schweißparameter aus der Gruppe umfassend Schweißgeschwindigkeit (V), Werkzeugdrehgeschwindigkeit (W), Senkrechtkraft (F), Werkzeugneigungswinkel ($\alpha$), größter Bolzendurchmesser ($\varphi$p), Ansatzdurchmesser ($\varphi$e) und dergleichen ausgewählt werden.

3. System für automatische Bestimmung von Schweißparametern nach Anspruch 1 und 2, **dadurch gekennzeichnet, dass** gennannte Bestimmungsvorrichtung für chemische Zusammensetzung eine Mühlvorrichtung zum Schleifen eines sehr kleines Bereiches der Oberfläche des gennannten Bestandteils, bevor die Prüfungen zur Bestimmung der chemischen Zusammensetzung durchgeführt werden, umfasst.

4. System nach Ansprüche 1 bis 3, **dadurch gekennzeichnet, dass**

- die Messmittel für die Schweißnahtdicke von der gennannten Schweißbedingungen-Auswertungsvorrichtung wenigstens einen Ultraschall-Lagesensor umfassen,
- die Bestimmungsvorrichtung für chemische Zusammensetzung von der gennannten Schweißbedingungen-Auswertungsvorrichtung wenigstens einen Nd-Yag-Laser (12), wenigstens ein Spektrometer und mehrere elektronische und optische Vorrichtungen und wenigstens eine Drehmühle (10) umfasst
- die Härteprüfvorrichtung von der gennannten Schweißbedingungen-Auswertungsvorrichtung wenigstens einen Ultraschall-Lagesensor (16) und wenigstens einen Eindruckstempel (15) mit einer Kugelspitze umfasst,
- die Datenverarbeitungsmittel von beiden gennannten Schweißbedingungen-Auswertungsvorrichtung und gennannten Schweißparameter-Bestimmungsvorrichtung wenigstens einen Personal Computer, wenigstens eine Tastatur, wenigstens einen Bildschirm und andere gemeinsame Peripheriegeräte umfassen.

5. Verfahren für automatische Bestimmung von Schweißparametern, für automatisiertes Rührreibschweißen oder Varianten davon, **dadurch gekennzeichnet, dass** es die Schritte von

a) Messung der Schweißnahtdicke,
b) Bestimmung der chemischen Zusammensetzung des Grundstoffs,
c) Bestimmung der metallurgischen Zustand des Grundstoffs,
d) manuelle Dateneingabe von Daten betreffend der Art von der Schweißnaht und Schweißdurchgang,
e) Datenverarbeitung aus den vorangehenden Schritten, um Daten über den Schweißbedingungen zu erhalten,
f) automatische Bestimmung der Schweißparameter, aufgrund von gennannten Schweißbedingungsdaten, durch Laufen von wenigstens einem Optimierungsalgorithmus und wenigstens einem Verfahrensmodell, umfasst.

6. Verfahren nach Anspruch 5, **dadurch gekennzeichnet, dass** gennannte Schweißparameter aus der Gruppe umfassend Schweißgeschwindigkeit (V), Werkzeugdrehgeschwindigkeit (W), Senkrechtkraft (F), Werkzeugneigungs-winkel ($\alpha$), größter Bolzendurchmesser ($\varphi$p), Ansatzdurchmesser ($\varphi$e) und dergleichen ausgewählt werden.

7. Verfahren nach Anspruch 5, **dadurch gekennzeichnet, dass** gennannter Schritt von Datenverarbeitung um Schweißbedingungsdaten zu erhalten, das Erhalten von den mechanischen Eigenschaften des gennannten Grundstoffs aus einer Datenbank erfasst.

**8.** Verfahren nach Anspruch 5, **dadurch gekennzeichnet, dass** gennannte chemische Zusammensetzung des gennannten Grundstoffs durch lasergesteuerte Durchschlagsspektroskopie-Methode oder eine beliebige Variante davon bestimmt wird.

**9.** Verfahren nach Anspruch 5, **dadurch gekennzeichnet, dass** gennannte chemische Zusammensetzung des gennannten Grundstoffs durch Röntgenfluoreszenzstrahlungsspektroskopie, oder eine beliebige Variante davon bestimmt wird.

**10.** Verfahren nach Anspruch 5, **dadurch gekennzeichnet, dass** gennannte chemische Zusammensetzung des gennannten Grundstoffs durch Messung der elektrischen Widerstandsfähigkeit und der magnetischen Durchlässigkeit des Grundstoffs bestimmt wird.

**11.** Verfahren nach Anspruch 5, **dadurch gekennzeichnet, dass** gennannter metallurgischer Zustand des gennannten Grundstoffs durch eine Härteprüfung bestimmt wird.

**12.** Verfahren nach Anspruch 5, **dadurch gekennzeichnet, dass** gennannter Schritt von automatischer Bestimmung der Schweißparameter wenigstens einen ersten Optimierungsalgorithmus, wenigstens einen zweiten Optimierungsalgorithmus und wenigstens einen Verfahrensmodell umfasst, wobei

- der erste Optimierungsalgorithmus einen Wert für die Schweißgeschwindigkeit (V) zufällig auswählt und diesen Wert zusammen mit gennannten Schweißbedingungen an einen zweiten Optimierungsalgorithmus überträgt, wobei
- der gennannte zweite Optimierungsalgorithmus berechnet die Schweißparameter, die den ausgewählten Schweißgeschwindigkeitswert (V) zu verwenden ermöglichen können und anschließend die letzten Schweißparameter und gennannte Schweißbedingungen einem Schweißverfahrensmodell übergibt, wobei
- der gennannte Verfahrensmodell ist geeignet, um die Schweißqualität, die diese Parameter erzeugen könnten, zu bewerten und seinerseits diese Information dem gennannten zweiten Optimierungsalgorithmus wieder übergibt, wobei
- der gennannte zweite Optimierungsalgorithmus wird die Schweißparameterwerte verändern und wiederholt diese Arbeitsschritt bis eine annehmbare Schweißqualität erreicht worden ist oder eine bestimmte Zahl von Iterationen verwendet worden ist, und schließlich die Ergebnisse dem gennannten ersten Optimierungsalgorithmus übergibt, wobei
- der gennannte ersten Optimierungsalgorithmus, aufgrund von den letzten Ergebnissen hinsichtlich der Schweißqualität wählt einen neuen Schweißgeschwindigkeitswert aus und überträgt das wieder, zusammen mit den Schweißbedingungen dem gennannten zweiten Optimierungsalgorithmus, um so für ein iteratives Laufen zu sorgen, bis die höchste Schweißgeschwindigkeit, die eine annehmbare Schweißqualität sicherstellt, erreicht wird.

**13.** Verfahren nach Ansprüche 5 und 12, **dadurch gekennzeichnet, dass** gennannter Verfahrensmodell des gennannten Schritts von der automatischen Bestimmung der Schweißparameter aus der Gruppe umfassend analytischer Modell, "Black-Box"-Modell, "Grey-Box"-Modell oder Kombinationen davon ausgewählt wird.

**14.** Verfahren nach Anspruch 13, **dadurch gekennzeichnet, dass** gennannter Verfahrensmodell ein "Black-Box"-Modell umfassend ein neuronales Netz von mehrlagigen Perzeptronen, mit einer versteckter Lage umfassend acht Verarbeitungseinheiten ist.

**15.** Verfahren nach dem vorangehenden Anspruch, **dadurch gekennzeichnet, dass** gennannter Verfahrensmodell nach der Vorwärts-Finite-Differenzen-Methode läuft.

**16.** Verwendung eines Systems nach Ansprüche 1 bis 4, in Verbindung mit einer Schweißmaschine, um einen automatisierten Schweißapparat zu sorgen.

**17.** Verwendung eines Systems nach Ansprüche 1 bis 4 in einem Rührreibschweißen-Verfahren oder Varianten davon.

**18.** Verwendung vom Verfahren nach Ansprüche 1 bis 15 in einem Schweißapparat.

**19.** Verwendung vom Verfahren nach dem vorangehenden Anspruch zum Verbinden von verschiedenen Werkstoffen.

**Revendications**

**1.** Système pour la détermination automatique de paramèteres de soudage, pour le soudage automatisé par friction et malaxage ou ses variantes, comprenant un dispositif d'évaluation des conditions de soudage et un dispositif de détermination des paramèteres de soudage, en communication de données l'un avec l'autre, **caractérisé en ce que**
ledit dispositif d'évaluation des conditions de soudage comprend

- des moyens de mesure de l'épaisseur du joint soudé,
- des moyens de détermination des caractéristiques de la matière de base, comprenant
un dispositif de détermination de la composition chimique un dispositif pour essais de dureté, pour évaluer l'état métallurgique de ladite matière de base,
- au moins un moyen de traitement de données, pour recevoir une entrée manuelle de données concernant le type de joint et le trajet de soudage et pour traiter les dernières données et l'information provenante desdits moyens de mesure de l'épaisseur du joint et desdits moyens de détermination des caractéristiques de la matière de base, de façon à obtenir les caractéristiques mécaniques de ladite matière de base à être soudée et à envoyer l'information audit dispositif de détermination des paramèteres de soudage,

et étant que ledit dispositif de détermination des paramèteres de soudage comprend des moyens électroniques pour calculer et sortir des paramèteres de soudage adéquats pour le soudage de ladite matière de base.

**2.** Système pour la détermination automatique de paramèteres de soudage selon la revendication 1, **caractérisé en ce que** lesdits paramèteres de soudage sont choisis parmi le groupe comprenant la vitesse de soudage (V), la vitesse de rotation de l'outil (W), la force verticale (F), l'angle d'inclinaison de l'outil ($\alpha$), le diamètre maximum de l'ergot ($\varphi p$), le diamètre de l'épaulement ($\varphi e$) et des paramèteres pareils.

**3.** Système pour la détermination automatique de paramèteres de soudage selon la revendication 1 et 2, **caractérisé en ce que** ledit dispositif de détermination de la composition chimique comprend un dispositif broyeur, pour broyer une zone très petite de la surface dudit composant, avant de réaliser les essais pour en déterminer la composition chimique.

**4.** Système selon les revendications 1 à 3, **caractérisé en ce que**

- les moyens de mesure de l'épaisseur du joint soudé dudit dispositif d'évaluation des conditions de soudage sont au moins un capteur de position à ultra-sons,
- le dispositif de détermination de la composition chimique dudit dispositif d'évaluation des conditions de soudage comprend au moins un laser Nd-Yag (12), au moins un spectromètre et plusieurs dispositifs électroniques et optiques et comprend au moins un broyeur rotatif (10),
- le dispositif pour essais de dureté dudit dispositif d'évaluation des conditions de soudage comprend au moins un capteur de position à ultra-sons (16) et au moins un pénétrateur (15) à pointe sphérique,
- les moyens de traitement de données à la fois dudit dispositif d'évaluation des conditions de soudage et dudit dispositif de détermination des paramèteres de soudage comprennent au moins un ordinateur personnel, au moins un clavier, au moins un moniteur et d'autres unités périphériques en commun.

**5.** Procédé pour la détermination automatique de paramèteres de soudage, pour le soudage automatisé par friction et malaxage ou ses variantes, **caractérisé en ce qu'**il comprend les étapes de

a) mesure de l'épaisseur du joint soudé,
b) détermination de la composition chimique de la matière de base,
c) détermination de l'état métallurgique de la matière de base,
d) entrée manuelle de données concernant le type de joint et le trajet de soudage,
e) traitement de l'information des étapes précédentes, de façon à obtenir des données concernant les conditions de soudage,
f) détermination automatique des paramèteres de soudage, basée sur lesdites données concernant les conditions de soudage, en opérant au moins un algorithme d'optimisation et au moins un modèle de procédé.

6. Procédé selon la revendication 5, **caractérisé en ce que** lesdits paramèteres de soudage sont choisis parmi le groupe comprenant la vitesse de soudage (V), la vitesse de rotation de l'outil (W), la force verticale (F), l'angle d'inclinaison de l'outil ($\alpha$), le diamètre maximum de l'ergot ($\varphi$p), le diamètre de l'épaulement ($\varphi$e) et des paramèteres pareils.

7. Procédé selon la revendication 5 et 6, **caractérisé en ce que** ladite étape de traitement de l'information pour obtenir des données concernant les conditions de soudage comprend l'obtention des caractéristiques mécaniques de ladite matière de base, à partir d'une base de données.

8. Procédé selon la revendication 5, **caractérisé en ce que** ladite composition chimique de ladite matière de base est déterminée par la méthode de spectroscopie par décharge disruptive produite par laser ou une variante pareille.

9. Procédé selon la revendication 5, **caractérisé en ce que** ladite composition chimique de ladite matière de base est déterminée par spectroscopie de fluorescence aux rayons X, ou une variante pareille.

10. Procédé selon la revendication 5, **caractérisé en ce que** ladite composition chimique de ladite matière de base est déterminée par la mesure de la résistivité électrique et la perméabilité magnétique de la matière de base.

11. Procédé selon la revendication 5, **caractérisé en ce que** ledit état métallurgique de ladite matière de base est déterminé par un essai de dureté.

12. Procédé selon la revendication 5, **caractérisé en ce que** ladite étape de détermination automatique des paramèteres de soudage comprend au moins un premier algorithme d'optimisation, au moins un second algorithme d'optimisation et au moins un modèle de procédé, étant que

   - le premier algorithme d'optimisation prélève au hasard une valeur pour la vitesse de soudage (V) et transmet cette valeur, ainsi que lesdites conditions de soudage, à un second algorithme d'optimisation, étant que
   - ledit second algorithme d'optimisation calcule les paramètres de soudage qui pourront permettre d'employer la valeur de vitesse de soudage (V) choisie et présente ensuite les derniers paramètres de soudage et lesdites conditions de soudage à un modèle du procédé de soudage, étant que
   - ledit modèle de procédé est apte à évaluer la qualité du soudage que ces paramètres pourraient générer et, à son tour, il transmet cette information de nouveau audit second algorithme d'optimisation, étant que
   - ledit second algorithme d'optimisation changera les valeurs des paramètres de soudage et répétera cette opération, jusqu'à avoir atteint une qualité acceptable du soudage ou jusqu'à avoir opéré un certain nombre d'itérations et, finalement, il en présente les résultats audit premier algorithme d'optimisation, étant que
   - ledit premier algorithme d'optimisation, basé sur les derniers résultats concernant la qualité du soudage, choisit une nouvelle valeur de la vitesse de soudage et l'envoye de nouveau, avec les conditions de soudage, audit second algorithme d'optimisation, en assurant une opération itérative, jusqu'à atteindre la vitesse maximale de soudage qui assure une qualité acceptable du soudage.

13. Procédé selon les revendications 5 et 12, **caractérisé en ce que** ledit modèle de procédé de ladite étape de détermination automatique des paramèteres de soudage est choisi parmi le groupe comprenant le modèle analytique, le modèle "black-box", le modèle "grey-box" ou des combinaisons de ceux-là.

14. Procédé selon la revendication 13, **caractérisé en ce que** ledit modèle de procédé est un modèle "black-box", comprenant un réseau neuronal à perceptrons multicouches, avec une couche cachée comprenant huit unités de traitement.

15. Procédé selon la revendication précédente, **caractérisé en ce que** ledit modèle de procédé opère suivant la méthode des différences finies progressives.

16. Emploi de système selon les revendications 1 à 4 en connexion avec une machine à souder, pour fournir un appareil à souder automatisé.

17. Emploi de système selon les revendications 1 à 4 dans un procédé de soudage par friction et malaxage et ses variantes.

18. Emploi de procédé selon les revendications 1 à 15 dans un appareil à souder.

**19.** Emploi de procédé selon la revendication précédente pour la jonction de matières différentes.

Fig. 1

Fig. 2

Fig. 3

Fig. 4

Fig. 5

Fig. 6

Fig. 7

HF

Fig. 9

SPECTROMETER

Fig. 8

Fig. 10

Fig. 11

Welding
Component 1

Welding
Component 2

Thickness
Measurement

Chemical
Composition
Determination

Metallurgical
State
Determination

Thickness
Measurement

Chemical
Composition
Determination

Metallurgical
State
Determination

Mechanical
Properties
Database

Mechanical
Properties
Database

Joint Type

Welding
Conditions

Fig. 12

Welding
Conditions

Process
Model

Welding
Quality

Parameter
Selection

No

Acceptable Quality?

*Optimization of Welding Quality*

Yes

V

Maximum V?

Selection
Of V

*Optimization of V*

Welding
Parameters

Fig. 13

```
┌─────────────────────────────┐      ┌─────────────────────────┐
│    External information     │      │      Components          │
│      (user or other)        │      │     to be welded         │
└─────────────────────────────┘      └─────────────────────────┘
```

*Joint*
*Type*

```
        ╭─────────────────────────────╮
        │    Welding Conditions       │
        │       Assessment            │
        ╰─────────────────────────────╯
```

*Welding*
*Conditions*

```
        ╭─────────────────────────────╮
        │    Welding Parameters       │
        │      Determination          │
        ╰─────────────────────────────╯
```

*Welding*
*Parameters*

```
        ┌─────────────────────────────┐
        │      Welding Operation       │
        └─────────────────────────────┘
```

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0615480 A
- EP 0752926 A
- US 20030205565 A
- FR 2881067
- WO 2006077356 A1
- US 20080083817 A
- WO 2007027117 A